# FASCICULE DE BREVET EUROPEEN

(11) **EP 1 021 792 B1**
(45) Date de publication et mention de la délivrance du brevet: **19.03.2008**
(21) Numéro de dépôt: 98947625.4
(22) Date de dépôt: 08.10.1998
(51) Int. Cl.: G06K 19/077

(54) **PROCEDE DE FABRICATION DE CARTES A PUCE APTES A ASSURER UN FONCTIONNEMENT A CONTACT, ET SANS CONTACT**
VERFAHREN ZUM HERSTELLEN EINER CHIPKARTE, GEEIGNET ZUM KONTAKTBEHAFTETEN ODER KONTAKTLOSEN BETRIEB
METHOD FOR MAKING SMART CARDS CAPABLE OF OPERATING WITH AND WITHOUT CONTACTS

(30) Priorité: 08.10.1997 FR 9712530
(43) Date de publication de la demande: 26.07.2000
(73) Titulaire: GEMPLUS, 13881 Gémenos Cédex (FR)
(72) Inventeur: AYALA, Stéphane, F-13010 Marseille (FR); BOURNEIX, Gérard, F-13850 Greasque (FR); BEAUSOLEIL, Christine, F-13012 Marseille (FR); MARTIN, David, F-13600 La Ciotat (FR); ODDOU, Laurent, F-13600 La Ciotat (FR); PATRICE, Philippe, F-13190 Allauch (FR); ZAFRANY, Michael, F-13600 Marseille (FR)
(86) Numéro de dépôt international: PCT/FR1998/002147
(87) Numéro de publication internationale: WO 1999/018541

(56) Documents cités:
- EP-A- 0 682 321
- EP-A- 0 723 244
- EP-A- 0 737 935
- EP-A- 0 756 244
- WO-A-97/34247
- FR-A- 2 523 335
- US-A- 5 528 222
- US-A- 5 598 032

## Description

L'invention concerne la fabrication des cartes à puce, aptes à assurer un mode de fonctionnement sans contact. Ces cartes sont munies d'une antenne intégrée dans la carte et d'un micromodule relié à l'antenne. Les échanges d'informations avec l'extérieur se font par l'antenne donc sans contact.

L'invention concerne également les cartes à puce mixtes, c'est-à-dire aptes à assurer un fonctionnement sans contact par l'antenne et un fonctionnement par contact.

Cependant, on ne parlera dans la suite que de cartes mixtes.

Ces cartes sont destinées à réaliser diverses opérations, telles que bancaires, téléphoniques, d'identification, de débit ou de rechargement d'unités de compte.

Ces opérations peuvent s'effectuer soit en insérant la carte dans un lecteur, soit à distance par couplage électromagnétique (en principe de type inductif) entre une borne d'émission-réception et une carte placée dans la zone d'action de cette borne.

Le document EP0723244 G&D qui correspond au préambule de la revendication, décrit un élément d'enroulement pour un support d'informations avec un circuit intégré et accouplement sans contact, où une bobine comporte un enroulement de fil et une couche porteuse d'enroulement pour la stabilisation mécanique de l'enroulement, l'enroulement étant essentiellement complètement monté sur la couche porteuse d'enroulement séparée du support d'informations et attachée à la couche porteuse d'enroulement pendant le procédé d'enroulement ou directement après ce procédé d'enroulement. L'antenne a ses spires autour des plages de connexion, et un pont isolant recouvre en partie les spires.

Le document EP0737935 SONY décrit une carte à puce sans contact comportant un substrat et sur ce substrat au moins un composant semi conducteur ainsi qu'un enroulement formant antenne. Cette antenne est réalisée par gravage, et une borne est reliée à l'enroulement d'antenne. Un bossage est relié au composant semi conducteur avec la face active de ce composant vers le bas en "Flip-Chip", par l'intermédiaire d'une couche adhésive conducteur anisotropique. En alternative, la liaison est réalisée avec des fils soudés. L'antenne à ses spires autour des plages de connexion, et un pont isolant recouvre en partie les spires. Ce document prévoit l'encartage d'une puce, alors que l'invention vise l'encartage d'un module.

Le document W09734247 PAVCard décrit une carte à puce équipée d'une cavité fraisée dans un corps de carte, sur ses surfaces principales. La cavité permet la réception d'un composant semi-conducteur avec des contacts d'antenne pour le raccordement à une antenne inductive. L'antenne est formée par une couche d'enroulement disposée dans le corps de carte. La couche d'enroulement d'antenne possède des contacts aptes à coopérer avec le composant semi-conducteur. Des sections épaissies de l'antenne sont prévues dans le corps de carte et sont dégagées pendant le fraisage, afin d'assurer un bon contact entre l'antenne et le composant. Des feuilles sont assemblées avant un usinage de cavité, qui traverse l'antenne.

Le document US5598032 GEMPLUS (G174) décrit la fabrication d'une carte comportant un corps de carte, un module electronique qui comprend une puce de circuit integre et deux plages de contact, ainsi qu'une antenne reliée à des plages de contact du module par l'intermediaire de deux bornes de contact. La carte comporte en outre des plots de contact connectes a la puce pour un fonctionnement par contacts. Une etape menage dans le corps de carte une cavite laissant apparaitre les bornes de contact de l'antenne et une etape reporte le module electronique dans la cavite. Une feuille inférieure portant l'antenne est liée à une feuille supérieure formant corps de carte, où une cavité et des passages de contacts sont venus de moulage. La cavité s'étend au dessus de l'antenne.

Le document FR2523335 FLONIC decrit un procédé pour suréléver les plages de contact électrique d'une carte à mémoire, ladite carte comportant un ensemble formé d'un circuit intégré et d'un film support noyés à l'intérieur de la carte au cours d'une opération d'enrobage, les plages de contact constitués par un dépôt de cuivre étamé sur le support étant reliées aux bornes du circuit et accessibles à travers des ouvertures ménagés dans la carte, caractérisé en ce qu'il consiste à découper des pastilles métalliques de même forme que les plages de contact et à les souder sur ces plages avant ladite opération d'enrobage au moyen d'une soudure choisie compatible avec la résistance thermique des éléments adjacents de la carte déjà montés. Une pâte à braser à basse température est décrite.

Le document US5528222 IBM décrit une l'étiquette flexible mince et formant un objet portable sans contact qui fonctionne à la fréquence radio (RF) à l'aide d'un composant semi-conducteur à la logique intégrée, une mémoire, et des circuits de traitement des radio fréquences. Le composant est relié à l'antenne par des intercommunications placées sur un plan unique de câblage, sans croisements. Cet objet sans contact ainsi que ses constituants (substrat, antenne, et couvertures stratifiées) sont flexibles. Ce document prévoit l'encartage d'une puce avec une liaison par thermo compression, alors que l'invention vise l'encartage d'un module.

Le document EP0756244 G&D décrit un circuit avec un substrat isolant sur lequel un enroulement conducteur de forme plate est disposé. Cet enroulement se compose de sections ou couches d'enroulement séparées par les couches d'isolant. Pour relier entre elles ces couches, les différentes sections conductrices de l'enroulement sont pourvues d'au moins une ouverture qui est formé dans chaque couches d'isolant. Le raccordement entre les premiéres extrémités d'enroulement et un circuit intégré ou module contenant le circuit intégré est formé seulement par les extrémités d'enroulement et les points de raccordement du circuit intégré ou des contacts du module. Les différentes circonvolutions de l'enroulement sont disposées et dimensionnées de façon à permettre le gravage du circuit sans restriction dans un secteur se conformant à une norme à respecter. Ce document prévoit l'encartage d'une puce, alors que l'invention vise l'encartage d'un module.

Le document EP0682321 GIESECKE et DEVRIENT décrit une carter à mémoire avec un corps de carte rectangulaire, une ou plusieurs, couches, incorporant une puce et au moins un bobinage d'antenne, pour l'échange en énergie et/ou de données entre la puce et un lecteur de cartes externe. La puce et au moins deux éléments de contact sont incorporés dans un module placé de sorte que les éléments de contact soient électriquement reliés aux bornes du bobinage d'antenne. Le bobinage d'antenne est en forme d'enroulement plat appliqué à une couche d'isolation du corps de carte et découpé par estampage depuis une feuille métallique, ou sous forme d'impression par sérigraphie de métal. La puce est d'abord connectée à l'antenne, puis reportée dans la carte.

On rappelle que les cartes à contact sont définies par la norme usuelle ISO 7810.

Des normes imposent des contraintes de la fabrication. L'épaisseur faible de la carte (800 µm) est une contrainte majeure pour les cartes mixtes car il faut prévoir l'incorporation d'une antenne.

Des problèmes se posent de positionnement de l'antenne qui occupe presque toute la surface de la carte, de positionnement du module de circuit intégré (comprenant la puce et ses contacts) et de fiabilité de la connexion entre le module et l'antenne. Des contraintes de tenue mécanique et de coût doivent être prises en compte.

L'antenne est généralement un élément conducteur déposé en couche mince sur une feuille support en plastique. Aux extrémités de l'antenne sont prévues des plages de connexion qui doivent être connectées aux contacts du module.

Cet élément conducteur formant l'antenne sera dénommé dans la suite fil d'antenne. Il s'agit soit d'un fil incrusté dans une feuille support, soit de pistes imprimées.

Une solution utilise des feuilles plastiques pré-percées au niveau des plages de connexion formés par les deux extrémités du fil d'antenne, à les superposer sur la feuille supportant l'antenne et à les assembler par laminage à chaud ou à froid. La position des plages de connexion est limitée par la position du module elle-même définie par les normes ISO.

Il faut ensuite usiner une cavité dans le corps de carte, entre les plages de connexion et au-dessus des perforations prévues dans les feuilles plastiques recouvrant l'antenne, pour y placer le module, puis connecter les contacts du module aux plages de connexion en déposant une colle conductrice dans les perforations. Les spires passent entre les plages de connexion, de manière à pouvoir être reliées à ces plages de connexion qui se trouvent dans la région du micromodule.

Un problème se pose alors du fait que les spires peuvent être endommagées lors de l'usinage de la cavité. En effet, les spires peuvent même être détruites au cours de cette étape si l'antenne n'est pas positionnée de manière très précise par rapport à la position de la cavité.

L'invention permet de résoudre ce problème. A cette fin, l'invention est définie par les revendications.

L'invention permet d'obtenir un espace libre entre les plages de connexion de l'antenne, dans lequel il est possible de creuser une cavité pour le module sans risquer d'endommager les spires de l'antenne.

Dans la solution antérieure, le corps de carte en empilement de plusieurs feuilles, des perforations pratiquées dans chaque feuille doivent se superposer. Or, lors de l'étape de laminage, la géométrie des perforations n'est pas contrôlée et peut fluctuer. Au cours de ce laminage, la pression devient nulle à l'aplomb des perforations alors qu'elle est élevée sur le corps de carte. Cette différence de pression entraîne la création d'un défaut à la surface des cartes.

L'invention propose d'éviter ce problème carte puis d'usiner le corps de carte. Pour former la cavité et les puits de connexion un usinage sera fait de préférence en une seule étape, ceci étant rendu possible grâce au contrôle précis de la position de l'antenne par rapport à la position de la cavité.

Le fait d'usiner simultanément la cavité et les puits de connexion simplifie et accélère grandement le procédé de fabrication.

Par ailleurs, l'invention propose une solution au risque d'endommagement de l'antenne, voire même de destruction, en usinant cavité et puits de connexion dans une face supérieure du corps de carte, de manière que le plan d'usinage du fond de la cavité soit situé au-dessus du plan de l'antenne et que les puits soient situés au-dessus des plages de connexion et les mette à jour.

En outre, après l'usinage de la cavité, la connexion de l'antenne au module électronique se fait généralement par remplissage des puits de connexion à l'aide d'une colle conductrice. Lorsque le module est encarté, le temps de chauffage est trop court pour assurer une polymérisation correcte de la colle. Dans ces conditions les cartes doivent séjourner longtemps dans une étuve. De plus, étant donné que la température maximum supportée par le corps de carte est en général inférieure à 100°C, il est très difficile d'assurer une bonne interconnexion sans déformer le corps de carte. Par conséquent, dans ces conditions la fabrication des, cartes est longue et difficile et ne peut pas être adaptée à une production en masse.

L'invention apporte différentes solutions à ce problème d'interconnexion. Elle proposes notamment d'utiliser une pâte à braser à basse température de fusion, c'est-à-dire à température de fusion très inférieure à 180°C, pour réaliser la connexion entre les plages de connexion de l'antenne et le module électronique. Pour cela la pâte à braser comporte un alliage à base d'indium et d'étain, ou à base de bismuth, d'étain et de plomb, ou à base de bismuth, d'indium et d'étain.

Selon d'autres caractéristiques, la connexion entre les plages de connexion de l'antenne et le module électronique est réalisée au moyen d'une graisse conductrice, ou au moyen d'un joint en silicone chargé de particules métalliques.

D'autres particularités et avantages de l'invention apparaissent dans la description d'exemples illustrés aux figures annexées.
- la figure 1, un schéma d'une vue en perspective d'une antenne de carte à puce réalisée sur une feuille support,
- la figure 2, un schéma d'une vue en coupe d'un pont isolant de l'antenne de la figure 1,
- la figure 3, un schéma d'une vue en perspective d'un autre mode de réalisation d'une antenne de carte à puce,
- la figure 4, un schéma d'une vue en perspective d'un autre mode de réalisation d'une antenne de carte à puce,
- les figures 5A à 5C, des vues en coupe d'une carte au cours de différentes étapes d'un procédé de fabrication selon l'invention,
- la figure 6, un schéma d'une carte vue en coupe réalisée selon un autre procédé de fabrication selon l'invention,
- la figure 7A, une vue de dessus des contacts affleurants d'un module simple face,
- la figure 7B, une vue en perspective illustrant la position des puits de connexion par rapport à une cavité pratiquée dans un corps de carte,
- les figures 7C et 7D, deux vues de contacts face intérieure de modules double face,
- la figure 7E, une vue de perspective illustrant la position des puits de connexion dans la cavité.

D'une manière générale, les cartes à puce mixtes seront réalisées par collage (laminage à chaud ou à froid) de feuilles de matière plastique dans lesquelles on aura inséré ou intercalé le conducteur d'antenne; puis ouverture d'une cavité dans les feuilles assemblées, entre les plages de connexion prévues aux extrémités du conducteur d'antenne, pour y créer un logement destiné à recevoir le module électronique de circuit intégré; et mise en place de ce module de manière que deux plages conductrices du module viennent en contact électrique avec les plages de connexion du conducteur d'antenne, soit directement, soit le plus souvent par l'intermédiaire d'un élément de liaison conducteur.

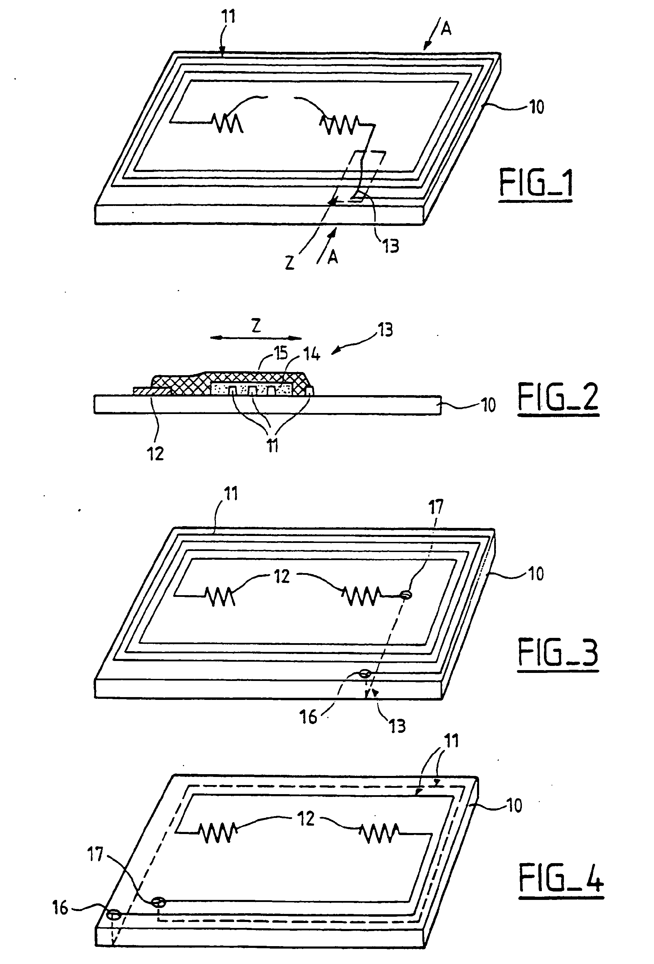

La figure 1 représente un premier mode de réalisation d'une antenne 11 comportant au moins deux spires et destinée à être enfermée dans le corps d'une carte à puce sans contact. Aux extrémités du fil d'antenne 11 sont prévues des plages de connexion 12. Une étape importante d'un procédé de fabrication d'une telle carte à puce sans contact consiste à réaliser l'antenne 11, sur une feuille support 10, de manière à définir précisément sa position dans le corps de carte par rapport à la position d'une cavité à usiner et destinée à recevoir le module électronique.

Selon un premier mode de réalisation les spires de cette antenne 11 sont placées à l'extérieur des plages de connexion 12, et un pont isolant 13 est réalisé de manière à pouvoir relier chacune des extrémités de l'antenne respectivement à une plage de connexion 12 sans création de court-circuit. Ce mode de réalisation permet de libérer l'espace situé entre les plages de connexion 12 de l'antenne 11 puisqu'aucune spire n'y passe. Cet espace étant libéré, les pistes de l'antenne ne risquent pas d'être endommagées, lors d'une étape ultérieure d'usinage de la cavité réservée au micromodule, et les tolérances de positionnement sont grandement élargies.

La figure 2 illustre une vue en coupe selon A-A de la figure 1 et représente le pont isolant 13 de l'antenne 11. Ce pont isolant 13 est réalisé en recouvrant, sur une zone Z, les spires de l'antenne 11 par une couche isolante 14, puis en déposant, sur cette couche isolante 14, un élément conducteur 15 permettant de relier l'extrémité d'une spire, et notamment l'extrémité de la dernière spire située la plus à l'extérieur de la feuille support 10, à l'une des plages de connexion 12 de l'antenne.

Selon un autre mode de réalisation, illustré sur les figures 3 et 4 l'antenne 11 est réalisée de part et d'autre de la feuille support 10. Dans ce cas, des via de connexion (trous métalliques) 16, 17 sont pratiqués dans la feuille support. Les plages de connexion 12 de l'antenne sont réalisées sur une même face. Le pont isolant 13 est donc réalisé au moyen de trous métalliques pour assurer la liaison entre les fils d'antenne se trouvant de part et d'autre de la feuille support 12, tel que schématisé en traits pointillés sur les figures 3 et 4.

Le pont isolant 13 permet ainsi de croiser les spires de l'antenne sans qu'elles se chevauchent directement et donc sans créer de court-circuit.

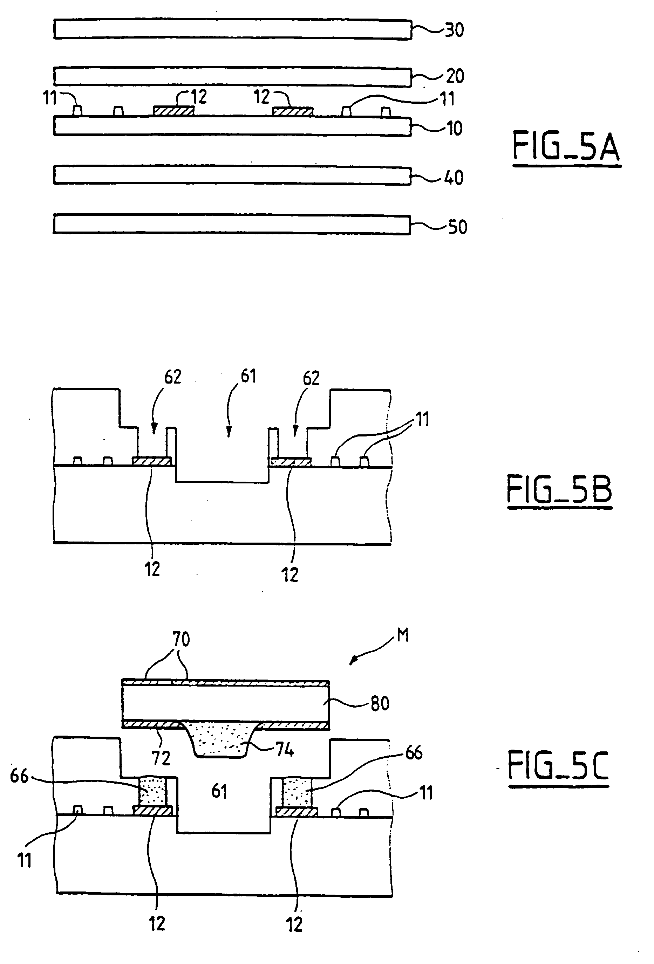

Après avoir réalisé cette antenne sur la feuille support 10, en matière plastique, on assemble cette feuille support 10 à d'autres feuilles plastiques 20, 30, 40, 50 et on les colle par laminage à chaud ou à froid. Cette étape d'assemblage est illustrée sur la figure 5A.

Les feuilles 20 et 40 correspondent à des feuilles, éventuellement imprimées, supérieure et inférieure du corps de carte. Les feuilles 30 et 50 sont des feuilles de protection respectivement supérieure et inférieure destinées à fermer le corps de carte et à protéger les feuilles imprimées 20 et 40.

Dans une variante de réalisation, il est possible de rajouter une sixième feuille plastique et de la positionner juste au-dessus de la feuille support 10 afin d'enfermer l'antenne 11.

Une étape ultérieure, illustrée sur la figure 5B, consiste à usiner une cavité 61 et des puits de connexion 62 dans une face supérieure du corps de carte formé par l'assemblage de feuilles 10, 20, 30, 40 et 50. Cet usinage pourra par exemple être fait en une seule étape.

Le plan d'usinage de la cavité 61 est situé au-dessous des plages de connexion 12 de l'antenne 11. Les puits de connexion 62, quant à eux, sont situés au-dessus des plages de connexion 12 de l'antenne et permettent de mettre ces-dernières à jour.

L'usinage de la cavité et des puits de connexion est réalisé au moyen d'une fraise dont la descente est contrôlée.

La dernière étape du procédé, représentée en figure 5C, consiste ensuite à fixer un module électronique M dans la cavité 61. Le module M comporte sur sa face inférieure, tournée vers l'intérieur de la cavité, des plages conductrices 72 en contact électrique avec les plages de connexion 12 de l'antenne au moyen d'un élément de liaison conducteur 66 placé dans les puits de connexion 62. La manière dont la connexion est établie entre le module et l'antenne est expliquée plus en détail dans ce qui suit.

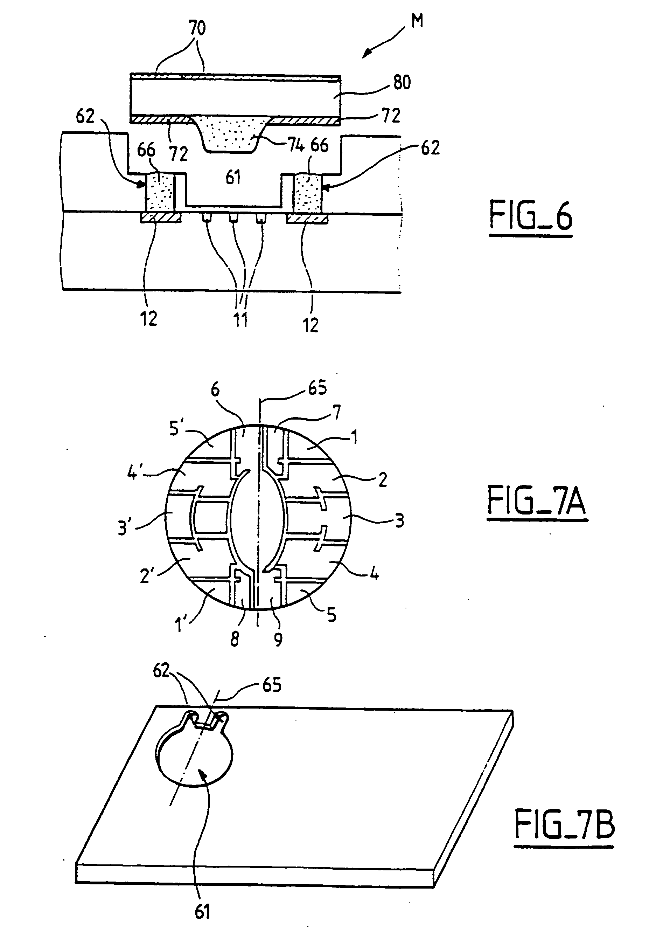

Un procédé de fabrication de carte à puce mixte selon un autre mode de réalisation, et illustré par la figure 6, peut en outre être envisagé pour positionner de manière précise l'antenne par rapport à la cavité du module.

Selon cet autre mode de réalisation, l'antenne 11 est réalisée de manière classique sur une feuille support, c'est-à-dire que les spires de l'antenne passent entre les plages de connexion 12. La feuille supportant l'antenne est ensuite assemblée aux autres feuilles plastiques; puis la cavité 61 et les puits de connexion 62 sont usinés sur la surface supérieure du corps de carte formé par l'assemblage de feuilles. Cette étape est réalisée de telle sorte que le plan d'usinage du fond de la cavité 61 soit situé au-dessus du plan des pistes de l'antenne 11 et que les puits de connexion 62 soient situés au-dessus des plages de connexion 12 de l'antenne et permettent de les mettre à jour. Le module électronique M est ensuite fixé dans la cavité et ses plages conductrices 72 sont électriquement reliées aux plages de connexion 12 de l'antenne à travers les puits de connexion 62.

Dans tous les cas, l'antenne 11 peut être réalisée par incrustation sur une feuille support en plastique. L'incrustation est effectuée de manière connue par un procédé à ultra-son.

D'autre part, pour minimiser les contraintes subies à l'interconnexion, notamment lors de tests des cartes en flexion ou en torsion, l'invention propose de placer l'antenne sur la fibre neutre de la carte. Ainsi, on prévoit de placer la feuille 10 supportant l'antenne de telle sorte qu'elle forme la fibre neutre de la carte. La fibre neutre d'une carte est définie comme étant placée au milieu de l'épaisseur de la carte.

De plus, dans une variante de réalisation du procédé selon l'invention il est possible de réaliser l'usinage de telle sorte que les puits de connexion traversent les plages de connexion 12 de l'antenne. Dans ce cas, la connexion avec le module électronique se fait latéralement, c'est-à-dire par la tranche des plages de connexion, en appliquant un élément de liaison conducteur dans les puits de connexion et sur les bords latéraux des plages de connexion.

En général, la surface de contact des plages de connexion de l'antenne est faible car elle est du même ordre de grandeur que la largeur du fil conducteur utilisé pour former l'antenne (c'est-à-dire quelques dizaine de µm). Par conséquent, l'interconnexion avec le module électronique est difficile à mettre en oeuvre car elle exige beaucoup de précision. Il est donc préférable de réaliser les plages de connexion 12 de telle sorte qu'elles présentent un motif en zigzag afin d'accroître leur surface de contact. Ce motif en zigzag est effectué par torsions du fil d'antenne (voir figures 1, 3, 4).

Le module M peut être un module à circuit imprimé simple face ou un module à circuit-imprimé double face, et dans ce dernier cas il peut avoir deux configurations possibles sur lesquelles on reviendra plus loin.

Un module M est représenté sur les figures 5 et 6 au-dessus de la cavité 61. Dans ces exemples il s'agit d'un module à circuit imprimé double face comportant des conducteurs supérieurs 70 sur la face qui sera tournée vers l'extérieur de la cavité et des conducteurs inférieurs 72 sur la face qui sera tournée vers l'intérieur de la cavité. Les conducteurs sont formés sur une feuille isolante 80 et des via conducteurs qui peuvent relier les conducteurs supérieurs 70 et inférieurs 72. Une puce noyée dans une résine de protection 74 est montée sur la face inférieure et connectée aux conducteurs 72 (et par là aux conducteurs 70).

Le module s'adapte dans la cavité 61 qui a été usinée à ses dimensions. Deux plages conductrices de la face inférieure du module, disposées juste au-dessus des plages de connexion 12 de l'antenne, sont reliées électriquement à ces deux plages de connexion grâce à un élément de liaison conducteur 66.

Dans une variante de réalisation particulièrement intéressante, le module est constitué par un circuit imprimé double face portant la puce de circuit intégré, mais ce circuit double face est réalisé sans via conducteur entre les conducteurs des deux faces, ce qui le rend moins coûteux. Dans ce cas, le circuit double face comporte une feuille isolante 80 portant sur une face des premières plages conductrices 70 destinées à servir de contacts d'accès de la carte à puce et sur l'autre face des secondes plages conductrices 72 destinées à être reliées à l'antenne. Des fils de liaison sont soudés entre la puce et les premières plages conductrices à travers des zones ajourées de la feuille isolante et d'autres fils de liaison sont soudés entre la puce et les secondes plages conductrices sans passer à travers la feuille isolante.

La définition d'un module simple face pour carte mixte consiste à trouver la position des contacts pour l'antenne, ce qui présente les difficultés suivantes :
- les zones de contact définies par les normes ISO et AFNOR ne peuvent pas accueillir les contacts de l'antenne sous peine de mettre le lecteur en court-circuit,
- coté assemblage, la résine de protection de la puce et des bondings élimine la zone centrale du module,
- les performances de résistance à la flexion de la carte impose la présence de ligne de déformation préférentielle sans faire apparaître de zones de fragilisation du métal coté contact.

La figure 7A schématise une vue de dessus des contacts affleurants d'une carte à puce dans le cas d'un module simple face et répondant à ces problèmes. Le module comporte des plages de contacts 1, 2, 3, 4, 5 et 1', 2', 3', 4', et 5', dont la position est normalisée par les normes ISO et AFNOR. Ces plages de contact sont connectées à la puce pour assurer le fonctionnement du module. La position des zones de contact à utiliser pour connecter le module et l'antenne ne peut se situer que dans les zones hautes 6 et 7 et basses 8 et 9 de part et d'autre d'un axe 65 du module, c'est-à-dire en dehors des zones de contact définis par la norme ISO.

Dans ces conditions donc, la position des plages de connexion de l'antenne ainsi que la position des puits de connexion dans le corps de carte sont limitées par la position normalisée des zones de contact du module électronique et par la position de ce module dans le corps de carte qui est elle-même définie par les normes ISO.

La figure 7B illustre le cas selon lequel les puits de connexion 62, et donc les plages de connexion correspondantes, sont situés côte à côte et de part et d'autre de la médiatrice 65 de la cavité 61. Ce cas correspond au cas où ce sont les zones de contacts 6 et 7 du module de la figure 7A qui sont électriquement reliées aux plages de connexion de l'antenne.

D'autre part, l'utilisation d'un module double face doit également pouvoir répondre aux inconvénients mentionnés à propos du module simple face.

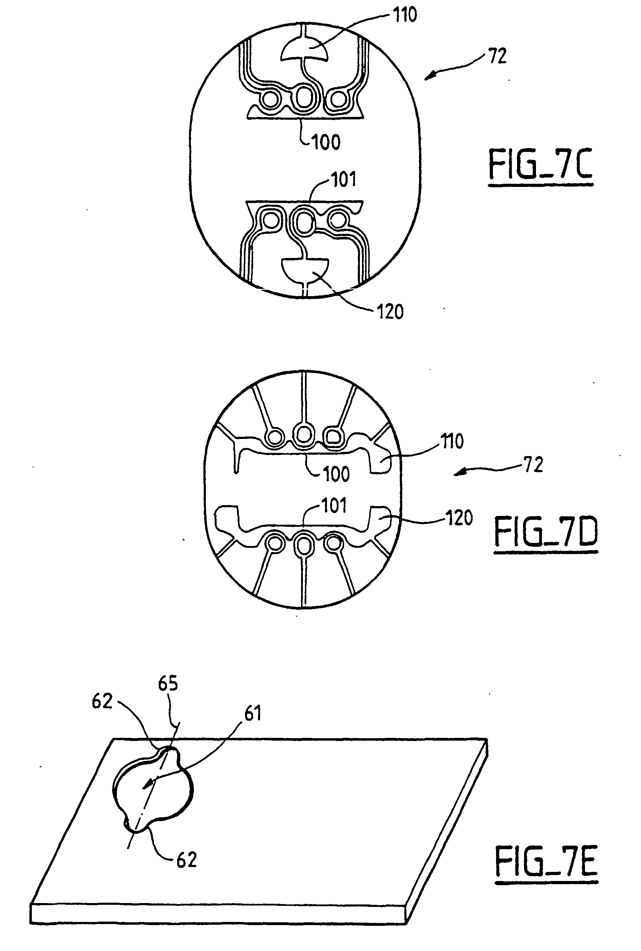

Les contacts représentés sur les figures 7C et 7D offrent une solution à ces problèmes. En particulier la présence de deux pistes 100, 101, de part et d'autre du circuit permet de connecter différentes configurations de puces avec le même module.

Ceux deux modes de réalisation de contacts pour module double face comportent au moins une piste à bord parallèle à la puce, reliée à des zones de contacts 110 et 120. Ces zones 110 et 120 représentent les zones de contacts possible avec l'antenne.

La figure 7E illustre le cas selon lequel les puits de connexion 62, et donc les plages de connexion de l'antenne, sont diamétralement opposés et situés sur une médiatrice 65 de la cavité. Ce cas correspond au cas où ce sont les zones de contacts 110 et 120 du module de la figure 7C qui sont électriquement reliées aux plages de connexion de l'antenne.

Les figures 7B et 7E illustrent des puits de connexion réalisés en continuité avec la cavité ce qui leur procure la forme particulière visible sur ces schémas. Bien entendu, ces puits pourraient ne pas êtres en continuité de la cavité et se présenter sous la forme de trous de forme quelconque dès l'instant où leur positionnement est tel que défini précédemment.

L'interconnexion entre le module électronique et l'antenne peut se faire à l'aide d'un élément de liaison conducteur de type pâte à braser. Cependant, en général les température de refusion de ces produits sont très élevées. Elles se situent autour de 180°C. Ces températures sont incompatibles avec les matériaux plastiques utilisés pour former les corps de carte qui ne supportent pas des températures très supérieures à 100°C.

L'invention propose d'utiliser des pâtes à braser à bas point de fusion pour permettre d'assurer une bonne compatibilité avec le corps de carte. Pour cela, il est préférable d'utiliser une pâte à braser comportant un alliage à base d'indium et d'étain, ou à base de bismuth, d'étain et de plomb, ou encore à base de bismuth, d'étain et d'indium.

Dans le cas d'un alliage d'indium et d'étain, la pâte à braser comporte au plus 52% en poids d'indium et 48% en poids d'étain. A cette composition, la température de fusion de la pâte à braser est égale à 118°C.

Dans le cas d'un alliage de bismuth, d'étain et de plomb, la pâte à braser comporte au plus 46% en poids de bismuth et 34% en poids d'étain et 20% en poids de plomb. A cette composition, la température de fusion de la pâte à braser est égale à 100°C.

Dans le cas d'un alliage de bismuth, d'indium et d'étain, la pâte à braser comporte au plus 57% en poids de bismuth, 26% en poids d'indium et 17% en poids d'étain. A cette composition, la température de fusion de la pâte à braser est égale à 79°C.

Une autre solution pour réaliser l'interconnexion consiste à déposer de la graisse conductrice chargée en particules métalliques dans les puits de connexion. Le contact s'effectue alors par friction et assure la conduction électrique entre l'antenne et le module, et ce quelles que soient les sollicitations mécaniques appliquées sur la carte.

Une troisième solution pour réaliser l'interconnexion consiste à utiliser un joint en silicone chargé en particules métalliques. Cette solution offre l'avantage d'une très grande souplesse du joint conducteur. Dans ce cas, les dimensions du joint en silicone sont supérieures à la hauteur des puits de connexion de façon à comprimer le silicone et mettre les particules métalliques en contact.

Quelle que soit la solution retenue, la fiabilité de l'interconnexion entre l'antenne et le module peut être augmentée en utilisant des billes d'or déposées sur les plages conductrices 72 du module. Ces billes d'or n'assurent pas la connexion mais augmentent la surface de collage et modifient la répartition des contraintes dans le joint conducteur lorsque la carte est soumise à des sollicitations mécaniques. Ces billes sont déposées par thermo-compression. Elles peuvent en outre être empilées pour augmenter la hauteur de la surface de contact.

## Revendications

1. Procédé de fabrication de carte à puce, la carte à puce comprenant une antenne (11) aux extrémités de laquelle sont prévues des plages de connexion (12), ledit procédé comprenant au moins une étape consistant à réaliser l'antenne (11) sur une feuille support (10) avec au moins deux spires et un pont isolant croisant les spires de manière à avoir les deux plages de connexion de l'antenne du même côté des spires, **caractérisé en ce qu**'il consiste en outre à :
- assembler la feuille support (10) à des feuilles plastiques (20, 30, 40, 50) pour former un corps de carte; puis
- usinier une cavité (61) et des puits de connexion (62) dans une face supérieure du corps de carte; puis
- fixer un module électronique (M) dans la cavité (61), le module ayant sur sa face inférieure, tournée vers l'intérieur de la cavité, des plages conductrices (72) en contact électrique avec les plages de connexion (12) de l'antenne au moyen d'un élément de liaison conducteur (66) placé dans les puits de connexion (62).

2. Procédé selon la revendication 1, **caractérisé en ce que**, pour réaliser le pont isolant (13), l'antenne (11) est formée de part et d'autre de la feuille support (10), les plages de connexion (12) étant réalisées sur une même face de la feuille support.

3. Procédé selon l'une des revendications 1 ou 2, **caractérisé en ce que** le plan d'usinage de la cavité (61) est situé en dessous du plan des plages de connexion (12) de l'antenne (11) et les puits de connexion (62) étant situés au-dessus des plages de connexion (12) de l'antenne pour les mettre à jour.

4. Procédé selon la revendication 1 ou 2, **caractérisé en ce que** l'étape consistant à usiner une cavité (61) et des puits de connexion (62) dans une face supérieure du corps de carte, est effectuée de manière que le plan d'usinage du fond de la cavité soit situé au-dessus du plan de l'antenne (11) et que les puits de connexion (62) soient situés au-dessus des plages de connexion de l'antenne (12) et permettent de les mettre à jour.

5. Procédé selon l'une des revendications 1 à 4, **caractérisé en ce que** la feuille support (10) est placée entre des feuilles plastiques de manière à former la fibre neutre de la carte.

6. Procédé selon l'une des revendications 1 à 5 **caractérisé en ce que** l'antenne (11) est réalisée par incrustation sur la feuille support (10).

7. Procédé selon l'une des revendications 1 à 6, **caractérisé en ce que** les plages de connexion (12) sont réalisées selon un motif en zigzag.

8. Procédé selon l'une des revendications 1 à 7, **caractérisé en ce que** l'usinage des puits de connexion (62) est réalisé à travers les plages de connexion (12) de l'antenne (11).

9. Procédé selon l'une des revendications 1 à 8, **caractérisé en ce que** les puits de connexion (62) sont diamétralement opposés et situés sur une médiatrice (65) de la cavité (61).

10. Procédé selon l'une des revendications 1 à 8, **caractérisé en ce que** les puits de connexion (62) sont situés côte à côte et de part et d'autre d'une médiatrice (65) de la cavité (61).

11. Procédé selon l'une des revendications 1 à 10, dans lequel le module électronique (7) comporte une puce de circuit intégré et un circuit imprimé simple face comportant les zones de contacts affleurants définis par la norme ISO, **caractérisé en ce que** les plages de contact avec l'antenne sont en dehors des zones de contacts définis par la norme ISO.

12. Procédé selon l'une des revendications 1 à 11, dans lequel le module électronique (M) comporte une puce de circuit intégré et un circuit imprimé double face sans via conducteur entre les deux faces, le circuit double face comportant une feuille isolante (80) portant sur une face des premières plages conductrices (70) destinées à servir de contacts d'accès de la carte à puce et sur l'autre face des secondes plages conductrices (72) destinées à être reliées à l'antenne, les plages comportant des zones de contacts placées d'un même coté de cavité les zone de contact se prolongeant par une piste à bord parallèle au module électronique.

13. Procédé selon l'une des revendications 1 à 12, **caractérisé en ce que** la connexion entre les plages de connexion (12) de l'antenne (11) et les plages conductrices (72) du module (M) est réalisée au moyen d'une pâte à braser à basse température de fusion.

14. Procédé selon la revendication 13, **caractérisé en ce que** la pâte à braser utilisée comporte un alliage à base d'indium et d'étain.

15. Procédé selon l'une des revendications 13 ou 14, **caractérisé en ce que** la pâte à braser utilisée comporte au plus 52% en poids d'indium et 48% en poids d'étain.

16. Procédé selon la revendication 13, **caractérisé en ce que** la pâte à braser utilisée comporte un alliage à base de bismuth, d'étain et de plomb.

17. Procédé selon la revendication 16, **caractérisé en ce que** la pâte à braser comporte au plus 46% en poids de bismuth, 34% en pois d'étain et 20% en poids de plomb.

18. Procédé selon la revendication 13, **caractérisé en ce que** la pâte à braser utilisée comporte un alliage à base de bismuth, d'étain et de d'indium.

19. Procédé selon la revendication 18, **caractérisé en ce que** la pâte à braser comporte au plus 57% en poids de bismuth, 26% en poids d'indium et 17% en pois d'étain.

20. Procédé selon l'une des revendications 1 à 12, **caractérisé en ce que** la connexion entre les plages de connexion (12) de l'antenne (11) et les plages conductrices (72) du module (M) est réalisée au moyen d'une graisse chargée de particules métalliques.

21. Procédé selon l'une des revendications 1 à 12, **caractérisé en ce que** la connexion entre les plages de connexion (12) de l'antenne (11) et les plages conductrices (72) du module (M) est réalisée au moyen d'un joint en silicone chargé de particules métalliques.

22. Procédé selon l'une des revendications 1 à 12, **caractérisé en ce que** des billes d'or sont en outre déposées par thermo-compression sur les plages conductrices (72) du module (M) pour augmenter la surface de collage entre le module et l'antenne.

## Claims

1. A method for making smart cards, the smart cards comprising an antenna (11) at the ends of which connection pads (12) are provided, said method comprising at least a step consisting in producing the antenna (11) on a support sheet (10) with at least two turns and an insulating bridge crossing the turns so as to have the two connection pads of the antenna on the same side of the turns, **characterised in that** it further consists in:
- assembling the support sheet (10) with plastic sheets (20, 30, 40, 50) to form a card body; then
- machining a cavity (61) and connection pads (62) in an upper side of the card body; then
- attaching an electronic module (M) in the cavity (61), the module having on its lower side, turned towards the inside of the cavity, conductor pads (72) in electrical contact with the connection pads (12) of the antenna by means of a conductive coupling element (66) located in the connection pads (62).

2. A method according to claim 1, **characterised in that**, to produce the insulating bridge (13), the antenna (11) is formed on either side by the support sheet (10), the connection pads (12) being produced on the same side as the support sheet.

3. A method according to one of claims 1 or 2, **characterised in that** the machining plane of the cavity (61) is located below the plane of the connection pads (12) of the antenna (11) and the connection pads (62) being located above the connection pads (12) of the antenna for them to be updated.

4. A method according to claim 1 or 2, **characterised in that** the step consisting in machining a cavity (61) and the connection pads (62) in an upper side of the card body is carried out so that the machining plane of the bottom of the cavity is located above the plane of the antenna (11) and that the connection pads (62) are located above the connection pads of the antenna (12) and allow them to be updated.

5. A method according to one of claims 1 to 4, **characterised in that** the support sheet (10) is located between plastic sheets such as to form the neutral axis of the card.

6. A method according to one of claims 1 to 5, **characterised in that** the antenna (11) is produced by incrustation on the support sheet (10).

7. A method according to one of claims 1 to 6, **characterised in that** the connection pads (12) are produced according to a zigzag pattern.

8. A method according to one of claims 1 to 7, **characterised in that** the machining of the connection pads (62) is produced through the connection pads (12) of the antenna (11).

9. A method according to one of claims 1 to 8, **characterised in that** the connection pads (62) are diametrically opposed and located on a perpendicular bisector (65) of the cavity (61).

10. A method according to one of claims 1 to 8, **characterised in that** the connection pads (62) are located side-by-side and on either side of a perpendicular bisector (65) of the cavity (61).

11. A method according to one of claims 1 to 10, wherein the electronic module (7) comprises an integrated circuit chip and a single-sided printed circuit comprising the flush contact areas defined by the ISO standard, **characterised in that** the contact pads with the antenna are outside of the contact areas defined by the ISO standard.

12. A method according to one of claims 1 to 11, wherein the electronic module (M) comprises an integrated circuit chip and a double-sided printed circuit without via conductor between the two sides, the double-sided circuit comprising an insulating sheet (80) supporting on one side the first conductor pads (70) intended to serve as smart card access contacts and on the other side the second conductor pads (72) intended to be connected to the antenna, the pads comprising contact areas located on the same cavity side, the contact areas extending via a track with ona edge parallel to the electronic module.

13. A method according to one of claims 1 to 12, **characterised in that** the connection between the connection pads (12) of the antenna (11) and the conductor pads (72) of the module (M) is produced by means of a low melting temperature soldering paste.

14. A method according to claim 13, **characterised in that** the soldering paste used comprises an indium and tin-based alloy.

15. A method according to one of claims 13 or 14, **characterised in that** the soldering paste used comprises at most 52% by weight of indium and 48% by weight of tin.

16. A method according to claim 13, **characterised in that** the soldering paste used comprises a bismuth, tin and lead-based alloy.

17. A method according to claim 16, **characterised in that** the soldering paste comprises at most 46% by weight of bismuth, 34% by weight of tin and 20% by weight of lead.

18. A method according to claim 13, **characterised in that** the soldering paste used comprises a bismuth, tin and indium-based alloy.

19. A method according to claim 18, **characterised in that** the soldering paste comprises at most 57% weight of bismuth, 26% by weight of indium and 17% by weight of tin.

20. A method according to one of claims 1 to 12, **characterised in that** the connection between the connection pads (12) of the antenna (11) and the conductor pads (72) of the module (M) is produced by means of a grease loaded with metal particles.

21. A method according to one of claims 1 to 12, **characterised in that** the connection between the connection pads (12) of the antenna (11) and the conductor pads (72) of the module (M) is produced by means of a silicon seal loaded with metal particles.

22. A method according to one of claims 1 to 12, **characterised in that** gold beads are further placed via thermo-compression on the conductor pads (72) of the module (M) to increase the bonding surface between the module and the antenna.

## Patentansprüche

1. Verfahren zur Herstellung von Chipkarten, wobei die Chipkarte eine Antenne (11) umfasst, an deren Enden Anschlussflächen (12) vorgesehen sind, wobei das besagte Verfahren mindestens einen Schritt umfaßt, der darin besteht, die Antenne (11) auf einem Unterlageblatt (10) mit mindestens zwei Spiralwindungen und einer Isolierungsbrücke zu realisieren, diedie Spiralwindungen überkreuzt, damit die beiden Anschlussflächen auf der gleichen Seite der Spiralwindungen liegen, **dadurch gekennzeichnet, daß** es außerdem darin besteht:
- Verbinden der Trägerfolie (10) mit Plastikfolien (62) in einer oberen Fläche des Kartenkörpers; dann
- Ausbildung eines Hohlraums (61) und von Anschlussschächten (62) in einer oberen Fläche des Kartenkörpers; dann
- Befestigung eines elektronischen Moduls (M) in dem Hohlraum (61), wobei das Modul an seiner unteren, in das Innere des Hohlraums gerichteten unteren Fläche leitende Bereiche (72) aufweist, die mit den Anschlussbereichen (12) der Antenne über ein leitendes, in den Anschlussschächten (66) vorgesehenes Verbindungselement (66) in elektrischem Kontakt stehen.

2. Verfahren nach Anspruch 1, **dadurch gekennzeichnet, dass** für die Herstellung der Isolationsbrücke (13) die Antenne (11) auf beiden Seiten der Trägerfolie (10) ausgebildet ist, wobei sich die Anschlussbereiche (12) auf einer gleichen Fläche der Trägerfolie befinden.

3. Verfahren nach einem der Ansprüche 1 oder 2, **dadurch gekennzeichnet, dass** die Ausbildungsebene des Hohlraums (61) unter der Ebene der Anschlussbereiche (12) der Antenne (11) liegt und sich die Anschlussschächte (62) über den Anschlussbereichen (12) der Antenne befinden, um sie offen zu legen.

4. Verfahren nach Anspruch 1 oder 2, **dadurch gekennzeichnet, dass** der Ausbildungsschritt eines Hohlraums (61) und der Anschlussschächte (62) in einer oberen Fläche des Kartenkörpers derartig durchgeführt wird, dass sich die Ausbildungsebene des Hohlraumbodens entweder über der Ebene der Antenne (11) befindet, oder dass die Anschlussschächte (62) über den Anschlussbereichen (12) der Antenne angeordnet sind und ihre Offenlegung ermöglichen.

5. Verfahren nach einem der Ansprüche 1 bis 4, **dadurch gekennzeichnet, dass** die Trägerfolie (10) zwischen Plastikfolien angeordnet ist, um somit die neutrale Faser der Karte zu bilden.

6. Verfahren nach einem der Ansprüche 1 bis 5, **dadurch gekennzeichnet, dass** die Antenne (11) auf der Trägerfolie (10) verkrustet ist.

7. Verfahren nach einem der Ansprüche 1 bis 6, **dadurch gekennzeichnet, dass** die Anschlussbereiche (12) gemäß einem Zickzack-Motiv realisiert sind.

8. Verfahren nach einem der Ansprüche 1 bis 7, **dadurch gekennzeichnet, dass** die Ausbildung der Anschlussschächte (62) durch die Anschlussbereiche (12) der Antenne (11) hindurch erfolgt.

9. Verfahren nach einem der Ansprüche 1 bis 8, **dadurch gekennzeichnet, dass** sich die Anschlussschächte (62) diametral gegenüber und auf einer Mittelsenkrechten (65) des Hohlraums (61) liegen.

10. Verfahren nach einem der Ansprüche 1 bis 8, **dadurch gekennzeichnet**, daas die Anschlussschächte (62) nebeneinander und auf beiden Seiten einer Mittelsenkrechten (65) des Hohlraums (61) angeordnet sind.

11. Verfahren nach einem der Ansprüche 1 bis 10, bei dem das elektronische Modul (7) einen IC-Chip und eine einflächige gedruckte Schaltung mit in der ISO-Norm definierten bündigen Kontaktzonen umfasst, **dadurch gekennzeichnet, dass** die Kontaktbereiche mit der Antenne außerhalb der in der Norm ISO definierten Kontaktzonen liegen.

12. Verfahren nach einem der Ansprüche 1 bis 11, bei dem das elektronische Modul (M) einen IC-Chip und eine zweiflächige gedruckte Schaltung ohne leitende Verbindung zwischen den beiden Flächen aufweist, wobei die zweiflächige Schaltung eine Isolationsfolie (80) aufweist mit auf der einen Fläche ersten leitenden Bereichen (70), die als Zugriffskontakte auf die Chipkarte dienen, und mit auf der anderen Fläche zweiten leitenden Bereichen (72) für die Verbindung mit der Antenne, wobei die Bereiche auf der selben Seite des Hohlraums angeordnete Kontaktzonen umfassen, und die Kontaktzonen von einer Bahn verlängert werden, deren Rand parallel zum elektronische Modul verläuft.

13. Vorfahren nach einem der Ansprüche 1 bis 12, **dadurch gekennzeichnet, dass** der Anschluss zwischen den Anschlussbereichen (12) der Antenne (11) und den leitenden Bereichen (72) des Moduls (M) mittels einer Lötpaste mit niedrige Schmelztemperatur erfolgt.

14. Verfahren nach Anspruch 13, **dadurch gekennzeichnet, dass** die verwendete Lötpaste eine Indium-/Zinnlegierung umfasst.

15. Verfahren nach einem der Ansprüche 13 oder 14, **dadurch gekennzeichnet, dass** die verwendete Lötpaste aus höchstens 52 Gew.-% Indium und 48 Gew.-% Zinn besteht.

16. Verfahren nach Anspruch 13, **dadurch gekennzeichnet, dass** die verwendete Lötpaste eine Wismut-/Zinn- und Bleilegierung umfasst.

17. Verfahren nach Anspruch 16, **dadurch gekennzeichnet, dass** die Lötpaste aus höchstens 46 Gew.-% Wismut, 34 Gew.-% Zinn und 20 Gew.-% Blei besteht.

18. Verfahren nach Anspruch 13, **dadurch gekennzeichnet, dass** die verwendete Lötpaste eine Wismut-/Zinn- und Indiumlegierung umfasst.

19. Verfahren nach Anspruch 18, **dadurch gekennzeichnet, dass** die Lötpaste aus höchstens 57 Gew.-% Wismut, 26 Gew.-% Indium und 17 Gew.-% Zinn besteht.

20. Verfahren nach einem der Ansprüche 1 bis 12, **dadurch gekennzeichnet, dass** der Anschluss zwischen den Anschlussbereichen (12) der Antenne (11) und den leitenden Bereichen (72) des Moduls (M) mittels einem mit Metallpartikeln geladenen Fett erfolgt.

21. Verfahren nach einem der Ansprüche 1 bis 12, **dadurch gekennzeichnet, dass** der Anschluss zwischen den Anschlussbereichen (12) der Antenne (11) und den leitenden Bereichen (72) des Moduls (M) mittels einer mit Metallpartikeln geladenen Silikondichtung erfolgt.

22. Verfahren nach einem der Ansprüche 1 bis 12, **dadurch gekennzeichnet, dass** ferner Goldkugeln per Wärmedruck auf den leitenden Bereichen (72) des Moduls (M) aufgetragen sind, um die Klebfläche zwischen dem Modul und der Antenne zu vergrößern.
